# EUROPÄISCHE PATENTANMELDUNG

(11) **EP 1 961 479 A2**
(43) Veröffentlichungstag der Anmeldung: **27.08.2008**
(21) Anmeldenummer: 07104246.9
(22) Anmeldetag: 15.03.2007
(51) Int. Cl.: B01D 53/62, C01D 7/00, C01D 7/10

(54) **Verfahren und Vorrichtung zum binden von gasförmigem C02 im Zusammenhang mit Meerwasserentsalzung**

(30) Priorität: 11.01.2007 EP 07100387
(71) Anmelder: Silicon Fire AG, 6045 Meggen (CH)
(72) Erfinder: Krass, Florian, CH-6353 Weggis (CH)
(74) Vertreter: OK pat AG

(57) **Zusammenfassung**

Verfahren zum Binden von gasförmigem CO₂, wobei aus Meerwasser unter Energiezufuhr eine konzentrierte Salzsole erzeugt wird. Dann wird Ammoniak (NH₃) und das zu bindende CO₂ aus einem Oxidations - oder Reduktionsprozess, in die konzentrierte Salzsole eingeleitet. Es entsteht dabei Natriumhydrogencarbonat (NaHCO₃), das aus der ammoniakhaltigen Sole entnommen werden kann. Im Rahmen des beschriebenen Verfahrens wird aus dem Meerwasser auch Süsswasser erzeugt, das vorteilhafterweise eingesetzt wird, um durch Bewässerung das Anlegen "grüner Lungen" zu unterstützen.

## Beschreibung

Die vorliegende Anmeldung beansprucht die Priorität der Patentanmeldung EP 07 100 387.5, die am 11. Januar 2007 beim EPA eingereicht wurde.

Die vorliegende Anmeldung betrifft Verfahren und Vorrichtungen zum Binden von gasförmigem CO₂ im Zusammenhang mit Meerwasserentsalzung.

Kohlenstoffdioxid (meist Kohlendioxid genannt) ist eine chemische Verbindung aus Kohlenstoff und Sauerstoff. Kohlendioxid ist ein farb- und geruchloses Gas. Es ist mit einer geringen Konzentration ein natürlicher Bestandteil der Luft und entsteht in Lebewesen bei der Zellatmung, aber auch bei der Verbrennung von kohlenstoffhaltigen Substanzen unter ausreichendem Sauerstoff. Seit Beginn der Industrialisierung steigt der CO₂-Anteil in der Atmosphäre deutlich an. Hauptursache hierfür sind die vom Menschen verursachten - die sogenannten anthropogenen - CO₂-Emissionen.

Das Kohlendioxid in der Atmosphäre absorbiert einen Teil der Wärmestrahlung. Diese Eigenschaft macht Kohlendioxid zu einem so genannten Treibhausgas und ist einer der Mitverursacher des Treibhauseffekts.

Aus diesen und auch aus anderen Gründen wird zur Zeit in verschiedenste Richtungen geforscht und entwickelt, um einen Weg zu finden, um die anthropogenen CO₂-Emissionen zu reduzieren. Besonders im Zusammenhang mit der Energieerzeugung, die häufig durch das Verbrennen fossiler Energieträger, wie Kohle oder Gas, erfolgt, aber auch bei anderen Verbrennungsprozessen, zum Beispiel bei der Müllverbrennung, besteht ein grosser Bedarf zur CO₂ Reduktion. Es werden pro Jahr Milliarden von Millionen Tonnen CO₂ durch solche Prozesse in die Atmosphäre abgegeben.

Ein weiteres Problem baut sich derzeit durch die Zunahme von Meerwasserentsalzungsanlagen auf. Die bisher betriebene Form der Meerwasserentsalzung führt zu einer verstärkten Belastung der Meere mit Salzfrachten, die bei der Gewinnung von Trinkwasser wieder ins Meer zurück fliessen. Zusammen mit der globalen Klimaerwärmung und der Zunahme der Verdunstung, wird sich der Salzgehalt beispielsweise des Persischen Golfs mittelfristig erhöhen und damit den Betrieb der Anlagen zur Meerwasserentsalzung teurer machen. Ausserdem werden die empfindlichen biologischen Lebensräume gestört, wenn sich die Salzkonzentration ändert.

Entsalzungsanlagen mit Anlagen zur Salzproduktion zu kombinieren, um keinerlei Salzkonzentrat in das Meer zurückpumpen zu müssen, wird hier immer mehr als Lösung angesehen. Aber dieser Weg scheint nicht wirtschaftlich zu sein, da der Transportaufwand gross ist, um die so gewonnenen Salze geografisch gesehen an den richtigen Ort zu transportieren.

Ein weiterer Nachteil ist, dass Energie der größte Kostenfaktor bei der Gewinnung von Trinkwasser aus salzigem Meerwasser ist. Koppelt man die Anlage zur Energiegewinnung an ein herkömmliches Kraftwerk, so kann die erforderliche Energie durch das Kraftwerk geliefert werden. Leider entstehen im Kraftwerk aber umweltschädliche Stoffe, wie zum Beispiel CO₂, die mit dem Rauchgas in die Luft gelangen.

Im Folgenden wird das über 100 Jahre alte, so genannte Ammoniak-Soda-Verfahren (Solvay-Verfahren) erläutert, da dieses Verfahren gegenwärtig als nächstliegender Stand der Technik für die vorliegende Erfindung angesehen wird, obwohl die Aufgabenstellung der Erfindung eine andere ist, wie später erläutert wird. Bei dem Solvay-Verfahren geht man aus von den Rohstoffen Natriumchlorid (NaCl) und Kalk (CaCO₃). Als Hilfsstoff wird lediglich Ammoniak (NH₃) benötigt. Das Solvay-Verfahren verläuft über folgende Teilreaktionen (1) bis (4):

CaCO₃ → CaO+ CO₂ (1)

2 NaCl + 2 CO₂ + 2 NH₃ + 2 H₂O → 2 NaHCO₃ + 2 NH₄Cl (2)

2 NaHCO₃ → Na₂CO₃ + H₂O + CO₂ (3)

CaO + 2 NH₄Cl → 2 NH₃ + CaCl₂ + H₂O (4)

CaCO₃ + 2 NaCl → CaCl₂ + Na₂CO₃ (5)

In Gleichung (5) ist die Gesamtreaktion zusammen gefasst.

Beim Solvay-Verfahren geht es um die industrielle Herstellung von Soda. Es muss das für die Soda verbrauchte Kohlendioxid stets ersetzt werden. Zu diesem Zweck erhitzt man in Öfen Kalkstein (CaCO₃), der sich ab 900°C zu Calciumoxid (CaO) zersetzt. Bei diesem Prozess, der auch als Brennen von Kalk bezeichnet wird (siehe Gleichung (6)), wird CO₂ frei, das wiederum bei der Herstellung von Soda verbraucht wird. Dieser Vorgang braucht sehr viel Energie.

178,44 kJ + CaCO₃ --> CaO + CO₂ (6)

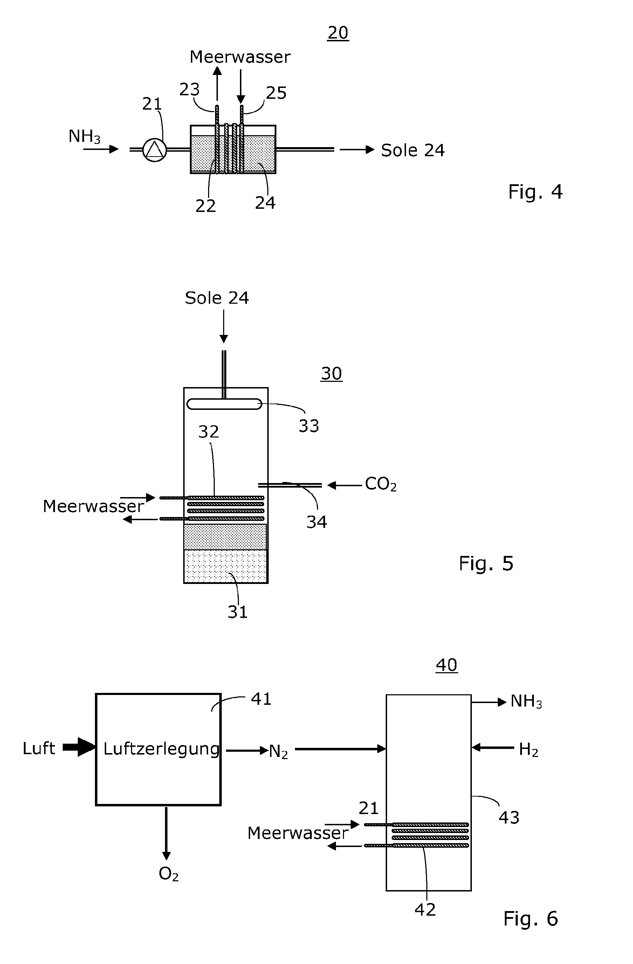

Eine Übersicht des Verfahrensablaufs ist in Fig. 5 dargestellt

Es wird neben der Energiebilanz als ein Nachteil der Solvay-Verfahrens angesehen, dass CO₂ aus Kalk freigesetzt wird, das bisher im Kalk fest gebunden war. Dieses CO₂, auch wenn es dann in Form von Soda (Na₂CO₃) gebunden vorliegt, gelangt bei der Glasproduktion dann in die Atmosphäre.

Soda (Na₂CO₃) wird neben der Glasherstellung (mit Siliziumdioxid) auch in vielen anderen Bereichen verwendet und ist ein bedeutender Grundstoff. Für die Herstellung von Waschmitteln, Seifen und Nahrungsmitteln wird es ebenso verwendet wie für die Färberei und Bleicherei. Man findet Soda aber auch bei Farben, in Katalysatoren, Schädlingsbekämpfungs- und Düngemitteln, in Zellulose oder anderen Stoffen und zur Reduktion von Aluminiumoxid und Siliziumdioxid.

Es stellt sich nun die Aufgabe ein Verfahren bereit zu stellen, das in der Lage ist grössere Mengen CO₂ direkt oder indirekt zu binden.

Vorzugsweise soll dieses Verfahren so angelegt werden, dass es energetisch besonders günstig abläuft. Ausserdem soll das Verfahren eine breite Akzeptanz finden, um eine technische Umsetzung auf breite Basis zu ermöglichen.

In den Zeichnungen sind verschiedene Aspekte der Erfindung schematisch dargestellt, wobei die Zeichnungen zeigen:
- Fig. 1:: ein Schema einer konventionellen Meerwasserentsalzungsanlage, die im Zusammenhang mit der vorliegenden Erfindung eingesetzt werden kann;
- Fig. 2:: zeigt schematisch das bekannte Solvay-Verfahren;
- Fig. 3:: zeigt schematisch das erfindungsgemässe Verfahren in einer ersten Ausführungsform;
- Fig. 4:: zeigt schematisch eine Teilvorrichtung, die im erfindungsgemässen Verfahren eingesetzt werden kann;
- Fig. 5:: zeigt schematisch eine weitere Teilvorrichtung, die im erfindungsgemässen Verfahren eingesetzt werden kann;
- Fig. 6:: zeigt schematisch zwei weitere Teilvorrichtungen, die im erfindungsgemässen Verfahren eingesetzt werden können;

Das erfindungsgemässe Verfahren basiert auf einem neuartigen Konzept, welches unter Verwendung vorhandener Ausgangsstoffe das CO₂ in Natriumhydrogencarbonat (NaHCO₃) oder in Soda bindet, sowie eventuell auch in NH₄Cl.

Im Folgenden werden die einzelnen Ausgangsstoffe und die Produkte besprochen, die gemäss Erfindung zu Einsatz kommen, oder die im Rahmen des entsprechenden Verfahrens entstehen können.

### Meerwasser:

Gemäss Erfindung kommt vorzugsweise Meerwasser zum Einsatz, um daraus eine konzentrierte wäßrige Natriumchloridlösung zu erzeugen. Die aus dem Meerwasser erzeugte konzentrierte wäßrige Natriumchloridlösung wird hier vereinfachend als konzentrierte Salzsole bezeichnet.

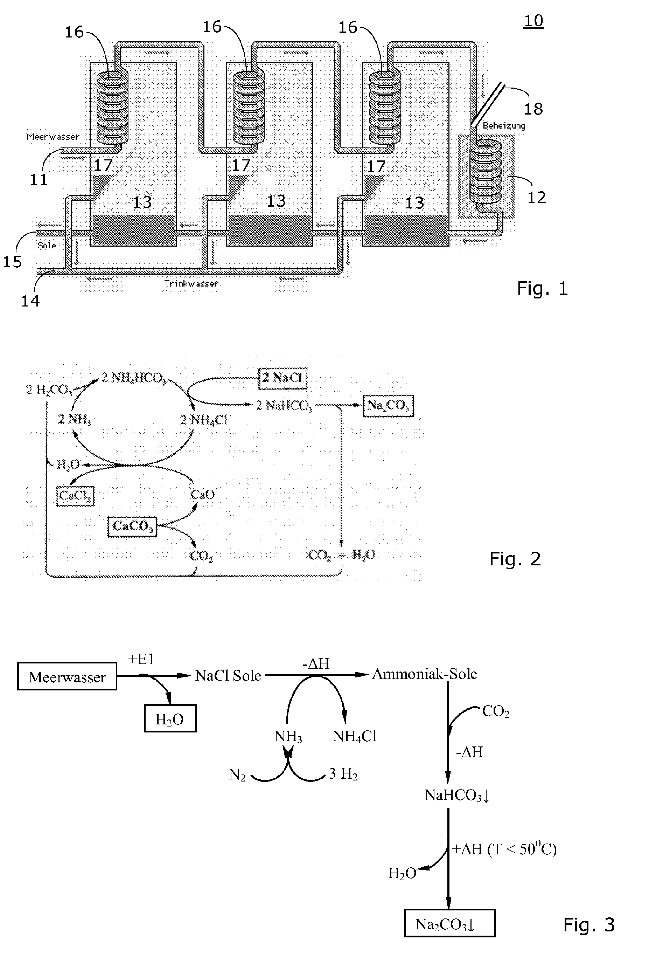

Vorzugsweise wird diese konzentrierte Salzsole (vorzugsweise eine gesättigte oder nahezu gesättigte Sole) durch ein Verdampfungsverfahren (thermisches Destillationsverfahren) erzeugt. Besonders bewährt hat sich die mehrstufige Entspannungsverdampfung. Eine entsprechende Anlage 10 ist in Fig. 1 gezeigt.

Die konzentrierte Salzsole hat vorzugsweise eine Salinität, die grösser ist als 200 g/l, und vorzugsweise grösser ist als 300 g/l. Es ist besonders vorteilhaft den Gesamtsalzgehalt (Salinität) der konzentrierten Salzsole durch eine Leitfähigkeitsmessung zu überwachen. Der Gesamtsalzgehalt kann auch durch Messung des pH-Werts überwacht und der gesamte Prozess dadurch gesteuert werden.

Die mehrstufige Entspannungsverdampfung (MSF - multistage flash evaporation) beruht auf der Verdampfung und nachfolgenden Kondensation des entstandenen Dampfes. Bei diesem Verfahren erhitzt man das Meerwasser, das durch eine Leitung 11 zugeführt wurde, in einem Heizbereich 12. Vorher jedoch läuft das Meerwasser durch mehrere Kühlschleifen 16. Dort wird das Meerwasser eingesetzt, um den Wasserdampf in Niederdrucktanks 13 zu kühlen, damit der Wasserdampf dort auskondensiert. Nach dem Erhitzen im Heizbereich 12 auf Temperaturen über 100°C wird dann das erwärmte Meerwasser in Niederdrucktanks 13 geleitet. Durch den geringen Druck entspannt sich das Wasser und verdampft dort. Dieser Dampf kondensiert danach an der entsprechenden Kühlschleife 16 und man erhält reines Wasser (hier als Süsswasser bezeichnet) in einem Bereich 17. Dieses Wasser kann durch eine Leitung 14 entnommen werden. Die konzentrierte Salzsole (NaCl-Sole) wird durch eine Leitung 15 entnommen.

Sogenannte Multi-Effekt-Destillation (MED - multiple effect distillation) Systeme operieren bei Temperaturen von 63 - 80°C. Dabei wird das Meerwasser wiederholt (8 - 16 mal) über Wärmetauscherröhren versprüht und unter Rückführung der Kondensationswärme verdampft, bis alle flüchtigen Substanzen entwichen sind.

Statt eines thermischen Verfahrens, kann aber auch ein Filterverfahren eingesetzt werden, das zum Beispiel auf einer umgekehrten Osmose beruht. Dabei kommt einfach ausgedrückt eine Membran zum Einsatz, die eine konzentrierte und eine verdünnte Lösung voneinander trennt.

Bevorzugt wird eine Lösung, die ein mehrstufiges Entspannungsverfahren mit einem Filterverfahren kombiniert.

Es gibt mittlerweile Geräte und Anlagen, die zwischen 3 und 10 kWh (entspricht zwischen 10,8 MJ und 36 MJ) Energie pro m³ Meerwasser verbrauchen (z.B.

Umkehrosmose-Anlagen). Diese Energie wird bei Umkehrosmose-Anlagen in Form von Strom verbraucht. Bei den thermischen Destillationsverfahren liegt der Energieverbrauch zwischen 3 und 6 kWh Strom (entspricht zwischen 10,8 MJ und 21,6 MJ) und ca. 230 MJ Wärmeenergie pro m³ Meerwasser bei einer MSF Anlage und zwischen 2 und 4 kWh Strom (entspricht zwischen 7,2 MJ und 14,4 MJ) und ca. 200 MJ Wärmeenergie pro m³ Meerwasser bei einer MED Anlage.

Gemäss Erfindung wird die Energiemenge E1, die benötig wird, um das mehrstufige Entspannungsverfahren zu betreiben, mindestens teilweise aus einem Kraftwerks- oder einem Pyrolyseprozess bereit gestellt. Der entsprechende Energieanteil wird hier mit E2 bezeichnet.

Ein weiterer Energieanteil E3 stammt aus kaskadiert ablaufenden chemischen Prozessen, die im Folgenden näher erläutert werden. Diese chemischen Prozesse nutzen die Nacl-Sole, die aus dem Meerwasser bereit gestellt wurde.

Die erfindungsgemässen Prozesse basieren auf einem ähnlichen Ansatz wie das eingangs beschriebene Solvay-Verfahren. Dieses Solvay-Verfahren ist in Fig. 2 schematisch dargestellt.

Das grundlegende Schema eines ersten erfindungsgemässen Prozesses ist in Fig. 3 gezeigt. Sowohl in Fig. 2 als auch in Fig. 3 sind die Edukte (Ausgangsstoffe) als auch die Produkte mit Umrandung dargestellt, während Zwischenprodukte ohne Umrandung gezeigt sind.

Man geht, wie bereits beschrieben, beim erfindungsgemässen Verfahren von Meerwasser aus, das umgewandelt wird in Süsswasser (H₂O) und NaCl-Sole (links oben in Fig, 3 gezeigt).

### Einleiten von Ammoniak (NH₃):

Nachdem aus dem Meerwasser die Nacl-Sole erzeugt wurde und das Süsswasser (H₂O) einer anderen Verwendung zugeführt wurde, wie später noch beschrieben wird, kommt nun Ammoniak (NH₃) zum Einsatz.

Gemäss Erfindung wird, ausgehend von der NaCl-Sole, in einem nachgeschalteten Verfahren eine ammoniakhaltige Sole (auch Ammoniak-Sole genannt) erzeugt. Dies geschieht durch das Einleiten von Ammoniak (NH₃) in die konzentrierte Salzsole (NaCl-Sole).

Vorzugsweise wird dieser Vorgang, auch Absorption des Ammoniaks in der Sole genannt, in einer sogenannten Sättigungsapparatur 20 durchgeführt. Dieser Schritt ist exotherm, d.h. es wird Energie frei. In Fig. 3 ist daher neben diesem Schritt ein -ΔH gezeigt.

Eine entsprechende Sättigungsapparatur 20 ist stark vereinfacht in Fig. 4 gezeigt. Mittels einer Pumpe 21 (z.B. einer Vakuumpumpe) wird das Ammoniak durch die Sättigungsapparatur 20 gepumpt oder gesaugt und wird entsprechend gekühlt. Vorzugsweise benutzt man hier einen Röhrenkühler 22 mit Rohren, die von kaltem Wasser durchflossen werden.

In einer gegenwärtig bevorzugten Ausführungsform der Erfindung, wird das Meerwasser, zum Beispiel direkt nach der Entnahme aus dem Meer, durch diese Rohre des Röhrenkühlers 22 geführt, wie in Fig. 4 angedeutet. Durch diese Massnahme werden zwei Vorteile erzielt: 1. wird das Meerwasser vorgeheizt, was die Energiebedarf für das Bereitstellen der Sole reduziert (falls ein thermisches Destillationsverfahren eingesetzt wird), da das Meerwasser bereits eine erhöhte Temperatur aufweist; 2. erfolgt eine Kühlung der ammoniakhaltigen Sole 24, was es ermöglicht anschliessend deutlich mehr CO₂ in dieser Sole zu lösen. Das Meerwasser hat, nach dem Durchlaufen des Röhrenkühlers 22 auf der Ausgangsseite 23 eine höhere Temperatur als auf der Eingangsseite 25. Es wird also Wärmeenergie, hier als E3* bezeichnet, an das Meerwasser übergeben. Diese Energie E3* ist ein erster Anteil des weiteren Energieanteils E3, der für das thermische Destillationsverfahren zur Bereitstellung der NaCl-Sole benötigt wird.

In der Sättigungsapparatur 20 kondensiert Wasserdampf durch Absorption, wodurch sich die Lösung verdünnt. Deshalb fällt das Natriumchlorid der Sole 24 trotz entsprechender Abnahme der Löslichkeit beim Einleiten des Ammoniaks nicht aus.

Um in einer bevorzugten Ausführungsform den Energiebedarf E1 für das Bereitstellen der Sole zu reduzieren, kann die Ausgangsseite 23 des Röhrenkühlers 22 zum Beispiel direkt mit der Eingangsseite 11 der Vorrichtung 10 verbunden werden. Alternativ kann der Röhrenkühler 22 von einem Wärmetransfermedium durchströmt werden, das Wärme durch Röhren zu der Beheizung 12 transportiert, um hier das Erhitzen des Meerwassers zu unterstützen. In diesem Fall wird der Röhrenkühler 22 nicht vom Meerwasser durchströmt.

Nun wird CO₂ in die ammoniakhaltige Sole 24 eingebracht. Dies kann geschehen, indem die ammoniakhaltige Sole 24 von oben in eine Vorrichtung 30 (z.B. in Form eines Füllturms) geleitet wird, während gleichzeitig von unten CO₂ hineingepumpt wird (siehe Fig. 5). Vorzugsweise wird die ammoniakhaltige Sole 24 durch einen Verteilkopf 33 oder durch Einspritzdüsen in die Vorrichtung 30 eingebracht.

Auch dieser Prozess ist exotherm und unter Wärmeentwicklung fällt das Natriumhydrogencarbonat (NaHCO₃) 31 aus. In Fig. 5 ist das Natriumhydrogencarbonat (NaHCO₃) 31 stark schematisiert im unteren Bereich der Vorrichtung 30 gezeigt.

Da die Löslichkeit von CO₂ in der ammoniakhaltigen Sole 24 mit steigender Temperatur abnimmt, sollten Kühleinrichtungen 32 eingesetzt werden, um die bei der exothermen Reaktion entstehende Wärme abzuführen. Diese Wärmeenergie wird als E3** bezeichnet.

Auch diese Kühleinrichtung 32 kann wiederum mit Meerwasser gekühlt werden, wie in Fig. 5 angedeutet. Damit wird das Meerwasser (weiter) vorgeheizt, bevor es in der Beheizung 12 endgültig auf eine Temperatur über 100°C gebracht wird. Alternativ kann die Kühleinrichtung 32 von einem Wärmetransfermedium durchströmt werden, das Wärme durch Röhren zu der Beheizung 12 transportiert, um hier das Erhitzen des Meerwassers zu unterstützen. In diesem Fall wird die Kühleinrichtung 32 nicht vom Meerwasser durchströmt.

Vorzugsweise werden die Kühleinrichtungen 22 und 32 in Reihe geschaltet und nacheinander von Meerwasser durchströmt, bevor dann das erwärmte Meerwasser über die Eingangsseite 11 in die Vorrichtung 10 gelangt.

Falls das Meerwasser durch die Abwärme E3* und E3** der exothermen Prozessschritte vorgewärmt wird, nimmt die Kühlleistung der Kühlschleifen 16 ab. Diese Kühlschleifen 16 arbeiten am besten bei Meerwassertemperaturen, die unter 50°C und vorzugsweise unter 30°C liegen. Daher kann in einer alternativen Ausführungsform das durch die Abwärme E3* und E3** vorgewärmte Wasser direkt über eine Bypass-Leitung 18 in die Heizung 12 geleitet werden, während kühleres Meerwasser durch die Kühlschleifen 16 geführt wird. Die Bypass-Leitung 18 ist in Fig. 1 ansatzweise angedeutet. Das kühlere Meerwasser wird bei dieser Ausführungsform mit dem vorgewärmten Meerwasser gemischt und dann auf über 100°C gebracht, bevor es dann in die Niederdrucktanks 13 gelangt.

Gemäss Erfindung kommt Ammoniak (NH₃) zum Einsatz, wie erwähnt. Es gibt verschiedene Wege, um das Ammoniak bereit zu stellen. Besonders bevorzugt ist der folgende Ansatz.

### Natriumhydrogencarbonat (NaHCO₃):

Das Natriumhydrogencarbonat (NaHCO₃) kann gelagert werden, um das CO₂ dauerhaft zu binden. Natriumhydrogencarbonat kann aber auch in chemischen Prozessen eingesetzt werden, bei denen möglichst kein CO₂ entsteht.

### Natriumcarbonat (NaCO₃/ Soda):

Das Natriumhydrogencarbonat (NaHCO₃) kann durch langsames Erwärmen getrocknet und damit als Pulver (calziniertes Soda = wasserfreies Natriumcarbonat: Na₂CO₃) bereitgestellt werden. Dieser Vorgang ist in Fig. 3 schematisch angedeutet. Vorzugsweise wird das beim Erwärmen entstehende Süsswasser auffangen. Das Erwärmen geschieht vorzugsweise bei einer Temperatur T<=50°C, um die Freisetzung von CO₂ ganz zu verhindern, oder um die freigesetzte CO₂ Menge zu reduzieren.

Das Natriumcarbonat kann gelagert werden, um das CO₂ dauerhaft zu binden. Natriumcarbonat kann aber auch in chemischen Prozessen eingesetzt werden, bei denen möglichst kein CO₂ entsteht.

### Gewinnung von Ammoniak NH₃ nach dem Haber-Bosch-Verfahren:

Ammoniak kann durch direkte Vereinigung von Stickstoff und Wasserstoff nach Gleichung (7) hergestellt werden:

N₂ + 3 H₂ ⇄ 2 NH₃ + 92 kJ (7)

Dieser Ansatz ist in Fig. 3 schematisch angedeutet. Die Ammoniaksynthese nach Gleichung (7) ist exotherm (Reaktionsenthalpie - 92.28 kJ/mol). Es handelt sich um eine Gleichgewichtsreaktion, die unter Volumenverminderung verläuft. Der Stickstoff kann zu Beispiel nach dem Linde-Verfahren bereit gestellt werden, bei dem aus der Umgebungsluft einerseits der Sauerstoff und andererseits der Stickstoff abgetrennt wird, wie in Fig. 6 schematisch durch den Verfahrensblock 41 dargestellt. Der Verfahrensblock 41 kann Teil einer Anlage 40 sein, die zum Bereitstellen des Ammoniaks (NH₃) ausgelegt ist.

Der Wasserstoff kann zum Beispiel auf konventionellem Wege aus Methan (CH₄) erzeugt werden. Dieses Methan kann aus einem Pyrolyseverfahren erzeugt werden, oder das Methan kann aus Ammoniumchlorid (NH₄Cl) und z.B. Methan erzeugt werden. Dieses NH₄Cl entsteht in dem erfindungsgemässen Verfahren als (Zwischen)Produkt, wie in Fig. 3 angedeutet (NH₄Cl ist eine weiteres Solvayausgangsprodukt). Man kann aber auch NH₄Cl einsetzen, um weiteres CO₂ zu binden.

Da die NH₃-Synthese nach (7) exotherm ist und unter Volumenverminderung abläuft, besteht eine Abhängigkeit der Ausbeute an NH₃ von Druck und Temperatur. Die exotherme Reaktion (7) verschiebt sich mit steigender Temperatur auf die Seite der Ausgangsprodukte, d. h. bei hoher Temperatur ist die Ausbeute an NH₃ geringer. Reaktionen mit Volumenabnahme verlagern sich bei Drucksteigerung auf die Seite der Endprodukte, d. h. hier zu höheren Ausbeuten an NH₃. Daher wird gemäss Erfindung vorzugsweise die NH₃-Synthese in einem NH₃-Synthese-Reaktor, z.B. in Form eines gekühlten Druckgefässes 43, durchgeführt. Besonders bevorzugt ist im vorliegenden Zusammenhang wiederum eine Kühlung mittels Meerwasser. Es kann auch hier eine Kühleinrichtung 42 eingesetzt werden, die wiederum Teil einer Reihenschaltung von meerwassergekühlten Kühleinrichtungen 22, 32 und 42 ist.

Die NH₃-Synthese nach (7) stellt einen Teil der Energie zur Verfügung, die für das Betreiben des thermische Destillationsverfahren zur Bereitstellung der NaCl-Sole benötigt wird. Dieser Energiebeitrag wird als E3*** bezeichnet.

Alternativ kann auch hier eine Kühlung mit einem Wärmetransfermedium vorgenommen werden, wie weiter oben beschrieben, um die Energie E3*** zu der Heizung 12 zu fördern.

Falls gewünscht, kann bei Bedarf aus dem Ammoniak (NH₃) auch Harnstoff nach folgender Gleichung (8) hergestellt werden (3. CO₂ Bindungsmöglichkeit):

2 NH₃ + CO₂ → (NH₂)2CO + H₂O (8)

Dieses Verfahren (8) kann eingesetzt werden, falls man zum Beispiel in dem parallel ablaufenden Kraftwerks- oder Pyrolyseprozess Harnstoff braucht, um Russpartikel oder andere Schadstoffe aus den Abgasen (Rauchgas) zu entfernen.

Der Harnstoff kann aber auch als Energiespeicher eingesetzt werden, da sich Harnstoff gut und problemlos speichern und/oder transportieren lässt. Der Harnstoff kann auch als Düngerrohstoff dienen.

### Ammoniumchlorid:

Ammoniumchlorid (NH₄Cl) entsteht in dem erfindungsgemässen Verfahren als (Zwischen)Produkt, wie in Fig. 3 angedeutet.

Ammoniumchlorid sublimiert beim Erhitzen und zerfällt ab 335°C vollständig in Ammoniak (NH₃) und Chlorwasserstoff (HCl), wie in Gleichung (9) gezeigt:

H₂O + 2 NH₄Cl → 2 NH₃ + HCI (9)

Dieser Prozess (9) kann genutzt werden, um Ammoniak (NH₃) (zurück) zu gewinnen. Chlorwasserstoff (HCI) ist ein wertvoller Rohstoff für viele industrielle Prozesse. Falls Natrium (Na) zur Hand ist, könnte optional wieder NaCl hergestellt werden.

Aus Ammoniumchlorid kann aber auch über folgenden optionalen Weg (10) Ammoniak (NH₃) (zurück) gewonnen werden. Auch bei diesem Prozess gewinnt man wieder NaCl:

NH₄C1 + NaOH -> NH₃ + NaCl + H₂O (10)

Verwendung findet Ammoniumchlorid heute unter anderem bei der Herstellung von Kältemischungen, in Färbereien und Gerbereien. Ebenfalls findet es Anwendung beim Verzinnen, Verzinken oder Löten, da es die Fähigkeit besitzt, mit Metalloxiden flüchtige Chloride zu bilden und somit die Metalloberfläche zu reinigen.

Aus dem Ammoniumchlorid kann aber auch Ammoniumsulfid (NH₄HSO₄) erzeugt werden, wie zum Beispiel in MXNL03000042 beschrieben.

Das Ammoniumchlorid kann aber auch als Wasserstoffspeicher eingesetzt werden.

Aus dem Ammoniumchlorid kann man Wasserstoff abspalten und diesen Wasserstoff nach folgender Reaktionsgleichung (11) mit CO₂ zu Methan und Wasser umwandeln. Das Verfahren (11) läuft bei ca. 1250°C ab und ist exotherm (setzt Energie frei). Die entsprechende Energiemenge, die bei (11) frei wird, kann als Energiebeitrag E3**** im Verfahren zur Herstellung der NaCl-Sole eingesetzt werden.

CO₂ + 3 H₂ → CH₄ + H₂O (11)

Dieses Verfahren (11) ist gegenwärtig besonders bevorzugt, da einerseits CO₂ gebunden wird und andererseits Methan zur Verfügung gestellt werden kann. Das Methan ist ein wertvoller Energieträger, der gelagert und transportiert werden kann. Besonders vorteilhaft ist es, wenn im Rahmen der Erfindung das Methan dazu eingesetzt wird, um mindestens einen Teil der Energiemenge E1 bereit zu stellen, die für das Herstellen der NaCI-Sole benötigt wird.

Das Methan kann aber auch zu längerkettigen Kohlenwasserstoffen umgesetzt oder verflüssigt werden.

Dass heisst, es ist möglich das Ammoniumchlorid als (Zwischen)Produkt für weitere wichtige Prozesse bereit zu stellen, oder das Ammoniumchlorid in entsprechende Produkte umzuwandeln.

### Modifizierter Soda/Pottasche-Aufschluss:

NaOH oder auch eine starke Soda-Pottasche-Lösung lösen Silicate, Al₂O₃ oder SiO₂, in dem es hydrolysiert wird zu niederverknüpften Silicaten (hauptsächlich Ring- und Kettensilicate [SiO₃]ₙ²ⁿ⁻).

Das Soda kann gemäss Erfindung in einem modifizierten Soda/Pottasche-Aufschluss eingesetzt werden, z.B. in der Aluminiumherstellung zur Schmelzpunkterniedrigung (fluorfrei ohne Kryolit), oder bei der Herstellung von Silizium aus Sand. Dieses Silizium kann wiederum eingesetzt werden, mit dem Kohlenstoff aus dem CO₂ exotherm zu Siliziumcarbid (SiC) zu reagieren.

### Kühlvorrichtungen:

Im vorliegenden Zusammenhang ist verschiedentlich von Kühlvorrichtungen die Rede. Es liegt auf der Hand, dass es verschiedene Wege gibt, um solche Kühlvorrichtungen zu realisieren.

### Süsswasser:

Ein weiterer wesentlicher Aspekt der Erfindung wird darin gesehen, dass beim Binden von CO₂, das aus einem Verbrennungs-, Pyrolyse- oder anderem industriellen Prozess stammt, neben dem wertvollen Soda auch Trinkwasser/Süsswasser entsteht. Diese Wasser ist quasi ein Abfallprodukt und kann für die Trinkwasserversorgung eingesetzt werden.

Wenn man weitere Massnahmen für eine echte CO₂-Reduktion ergreifen möchte, so kann das Wasser für die Bewässerung von Bepflanzungen und Neuanpflanzungen eingesetzt werden. Dadurch wird "lebende Biomasse" geschaffen, die durch Photosynthese dazu beiträgt weiteres CO₂ zu binden. Damit entsteht ein eigentlicher "Lawineneffekt" durch das "Bewässern" von Wüstenflächen.

Das erfindungsgemässe Verfahren zum Binden von gasförmigem CO₂, umfasst zusammenfassend die folgenden Schritte:
a. Bereitstellen von salzhaltigem Wasser, vorzugsweise Meerwasser,
b. Erzeugen einer konzentrierte Salzsole mit erhöhter Salzkonzentration aus dem salzhaltigen Wasser,
c. Bereitstellen von Ammoniak (NH₃),
d. Bereitstellen von CO₂ aus einem Oxidations -oder Reduktionsprozess,
e. in die konzentrierte Salzsole Einleiten des Ammoniaks (NH3), um eine ammoniakhaltige Sole zu erhalten, und Einleiten des CO₂,
f. Abtrennen von Natriumhydrogencarbonat (NaHCO₃) aus der ammoniakhaltigen Sole,
h. Auffangen und Bereitstellen von Süsswasser, das beim Erhitzen des salzhaltigen Wassers entsteht.

### AION® Pulver / Baustoffe:

Aus den Reaktionsprodukten, die gemäss Erfindung bereit gestellt werden, können wichtige Baustoffe gefertigt werden. Als ein Beispiel ist keramisches AION Pulver zu nennen. Dieses Pulver kann zum Beispiel durch das Zermahlen einer Mischung aus Aluminium und Aluminiumoxid in einer Stickstoffatmosphäre hergestellt werden. Dann wird dieses Pulver in einer inerten Gasatmosphäre erhitzt, um daraus ein homogenes Aluminium-Oxynitrid Material herzustellen. Details hierzu sind dem US Patent 6955798 zu entnehmen.

Das benötigte Aluminium kann mit der Soda gemäss Erfindung in einem modifizierten Soda/Pottasche-Aufschluss hergestellt werden.

## Patentansprüche

1. Verfahren zum Binden von gasförmigem CO₂, **gekennzeichnet durch** die folgenden Schritte:
a. Bereitstellen von salzhaltigem Wasser, vorzugsweise Meerwasser, unter Energiezufuhr,
b. Erzeugen einer konzentrierte Salzsole mit erhöhter Salzkonzentration aus dem salzhaltigen Wasser,
c. Bereitstellen von Ammoniak (NH₃),
d. Bereitstellen von CO₂ aus einem Oxidations - oder Reduktionsprozess,
e. in die konzentrierte Salzsole Einleiten des Ammoniaks (NH₃), um eine ammoniakhaltige Sole zu erhalten, und Einleiten des CO₂,
f. Abtrennen von Natriumhydrogencarbonat (NaHCO₃) aus der ammoniakhaltigen Sole,
g. Auffangen und Bereitstellen von Süsswasser, das beim Erhitzen des salzhaltigen Wassers entsteht.

2. Verfahren nach Anspruch 1, wobei das Natriumhydrogencarbonat (NaHCO₃) durch langsames Erwärmen getrocknet und damit als Pulver bereitgestellt wird, wobei das beim Erwärmen entstehende Süsswasser aufgefangen und bereitgestellt wird, wobei das Erwärmen vorzugsweise bei einer Temperatur T<=50°C geschieht, um die Freisetzung von CO₂ ganz zu verhindern, oder um die freigesetzte CO₂ Menge zu reduzieren.

3. Verfahren nach Anspruch 2, wobei das beim Erwärmen entstehende CO₂ erneut in die konzentrierte Salzsole eingeleitet wird.

4. Verfahren nach Anspruch 2, wobei das langsame Erwärmen in einem Drehrohrofen erfolgt.

5. Verfahren nach Anspruch 1, wobei im Schritt b. die konzentrierte Salzsole erzeugt wird durch:
- das Erhitzen des salzhaltigen Wassers, oder
- das Membranfiltern,
und wobei die konzentrierte Salzsole ganz oder weitestgehend mit Salz gesättigt ist.

6. Verfahren nach Anspruch 1, wobei im Schritt e. durch das Einleiten von Ammoniak (NH₃) eine Sättigung der konzentrierten Salzsole mit Ammoniak erzielt wird.

7. Verfahren nach Anspruch 1, wobei im Schritt f. das Natriumhydrogencarbonat (NaHCO₃) als Feststoff ausfällt.

8. Verfahren nach Anspruch 1, wobei die konzentrierte Salzsole eine Salinität hat, die grösser ist als 200 g/l, und vorzugsweise grösser ist als 300 g/l.

9. Verfahren nach Anspruch 1, wobei der Gesamtsalzgehalt (Salinität) der konzentrierten Salzsole durch eine Leitfähigkeitsmessung überwacht wird.

10. Verfahren nach Anspruch 1, wobei im Schritt e. das Einleiten von CO₂ in die konzentrierte Salzsole durch Messung des pH-Werts überwacht und gesteuert wird.

11. Verfahren nach Anspruch 1, wobei vor oder während dem Schritt e. die konzentrierte Salzsole abgekühlt wird, um die Löslichkeit von CO₂ zu erhöhen, was vorzugsweise durch das Hindurchleiten von Meerwasser durch Kühlrohre geschieht.

12. Verfahren nach Anspruch 1, wobei bei Schritt e. die konzentrierte Salzsole unter Druck gesetzt wird, um die Löslichkeit von CO₂ zu erhöhen, wobei vorzugsweise durch ein Regelsystem der Gesamtdruck so eingestellt wird, dass CO₂ in Lösung gehalten wird.

13. Verfahren nach Anspruch 1, wobei im Schritt e. mindestens ein Teil des Ammoniaks (NH₃) in die konzentrierte Salzsole eingeleitet wird, bevor das CO₂ in die konzentrierte Salzsole eingeleitet wird, um so eine Umsetzung zu Salzsäure zu vermeiden.

14. Verfahren nach einem der vorhergehenden Ansprüche, wobei die Bildung von Natriumhydrogencarbonat (NaHCO₃) exotherm verläuft

15. Verfahren nach einem der vorhergehenden Ansprüche, wobei im Schritt e. eine exotherme Absorption des Ammoniaks in der konzentrierten Salzsole passiert.

16. Verfahren nach einem der vorhergehenden Ansprüche, wobei die Energiezufuhr in Schritt a. durch eine Kopplung an einen Kraftwerksprozess erfolgt, wobei Wärmeenergie aus dem Kraftwerksprozess verwendet wird, um das salzhaltige Wasser zu erhitzen.

17. Verfahren nach einem der vorhergehenden Ansprüche 1 bis 15, wobei die Energiezufuhr in Schritt a. durch eine Kopplung an einen Pyrolyseprozess erfolgt, wobei Strom oder Gas, vorzugsweise Methan, aus der Pyrolyse verwendet wird, um das salzhaltige Wasser zu erhitzen.

18. Verfahren nach einem der vorhergehenden Ansprüche 1 bis 17, wobei das CO₂ im Schritt e. aus den Abgasen eines Kraftwerksprozesses und/oder Pyrolyseprozesses stammt.

19. Verfahren nach Anspruch 18, wobei die Wärme für die Pyrolyse in einem Mantelstromverfahren in einer äusseren Brennkammer erzeugt wird, welche eine innere Brennkammer umschliesst.

20. Vorrichtung zum Binden von gasförmigem CO₂ mit
- einer Entsalzungsanlage (10) zum Umsetzen von salzhaltigem Wasser, vorzugsweise Meerwasser, unter Energiezufuhr in Süsswasser und in eine konzentrierte Salzsole mit erhöhter Salzkonzentration,
- einer Vorrichtung (20) zum Aufnehmen der konzentrierten Salzsole, die Mittel (21) zum Einleiten von Ammoniaks (NH₃) umfasst, um eine ammoniakhaltige Sole erzeugen zu können,
- Mitteln (30, 33) zum Aufnehmen der ammoniakhaltige Sole (24),
- Mitteln (34) zur Entnahme von CO₂ aus einem Oxidations - oder Reduktionsprozess, und zum Einbringen des CO₂ in die ammoniakhaltige Sole (24), und mit
- Mitteln (30) zum Abtrennen von Natriumhydrogencarbonat (NaHCO₃) (31) aus der ammoniakhaltigen Sole (24).

21. Vorrichtung nach Anspruch 20, wobei die Entsalzungsanlage (10)
- eine mehrstufige Entspannungsverdampfungsvorrichtung (MSF - multistage flash evaporation), und/oder
- eine Multi-Effekt-Destillationsvorrichtung (MED - multiple effect distillation), und/oder
- eine Filtervorrichtung
umfasst.

22. Vorrichtung nach Anspruch 20 oder 22, wobei es sich bei der Vorrichtung (20, 21) zum Aufnehmen der konzentrierten Salzsole um eine Sättigungsapparatur handelt, die vorzugsweise einen Röhrenkühler (22) umfasst.

23. Vorrichtung nach Anspruch 20 oder 22, wobei es sich bei den Mitteln (30, 33) zum Aufnehmen der ammoniakhaltige Sole (24) um eine Vorrichtung handelt, die vorzugsweise einen Röhrenkühler (32) umfasst.

24. Vorrichtung nach Anspruch 23 in Kombination mit Anspruch 24, wobei beide Röhrenkühler (22, 32) in Reihe hintereinander angeordnet sind und von Meerwasser durchströmt werden.

25. Vorrichtung nach einem der Ansprüche 20 bis 24, wobei mindestens ein Teil der Energiezufuhr für die Entsalzungsanlage (10) durch einen anderen Teil (20, 30, 40) der Vorrichtung zur Verfügung gestellt wird.

26. Vorrichtung nach einem der Ansprüche 20 bis 25, mit einem Verfahrensblock (41) zum Auftrennen von Sauerstoff und Stickstoff aus Umgebungsluft.

27. Vorrichtung nach Anspruch 26, mit einer Anlage (40), die mit Stickstoff aus dem Verfahrensblock (41) und mit Wasserstoff gespeist wird, um Ammoniak (NH₃) bereit zu stellen.
